# EUROPEAN PATENT APPLICATION

(11) **EP 2 901 904 A1**
(43) Date of publication of application: **05.08.2015**
(21) Application number: 14164951.7
(22) Date of filing: 16.04.2014
(51) Int. Cl.: A47J 45/07

(54) **Apparatus for grasping a cooking receptacle**

(30) Priority: 03.02.2014 US 201414171406
(71) Applicant: The Handlr, LLC., New York NY 10010 (US)
(72) Inventor: Sullivan, Richard J., New York, NY 11963 (US); Smith, Scott William, New York, NY 11963 (US)
(74) Representative: Jennings, Nigel Robin

(57) **Abstract**

Apparatus for grasping a cooking receptacle comprises a handle portion including an upper arm (101) and a lower arm (102), the upper arm (101) including an upper distal end and an upper proximal end, and the lower arm (102) comprising a lower distal end and a lower proximal end. A hinge member (103) connects the upper proximal end of the upper arm (101) to the lower proximal end of the lower arm (102). A clamping portion (120) is provided comprising a head portion (106), a holding member (105) and a supporting member (107). The head portion (106) is disposed at the upper distal end of the upper arm (101). The holding member (105) disposed on the head portion (106) comprises a receiving groove (109). The supporting member (107) is disposed on the lower distal end of the lower arm (102) and affords a supporting surface.

## Description

### BACKGROUND OF THE INVENTION

### 1. Field of the Invention

The present invention relates generally to culinary items, and more particularly, to an apparatus for grasping a cooking receptacle.

### 2. Description of the Related Art

Hand protection is needed to grasp hot bakeware to avoid injury and discomfort when cooking. A user working in a kitchen often uses oven mitts to protect their hands when removing hot cooking receptacles, i.e., pans, pots, baking sheets, etc., from an oven. The user places the oven mitts over their hands, opens the oven door and grasps the hot cooking receptacle. In order to hold heavier cooking receptacles, the user's thumb, covered by the oven mitt, will often encroach on an inside area of the cooking receptacle. When this occurs, the user's thumb may damage a food item disposed within the cooking receptacle and soil the oven mitt.

The user then carries the hot cooking receptacle to an appropriate preparation surface to continue preparing the food item and removes the oven mitts because the oven mitts inhibit dexterity of the user's hands. Upon removing the oven mitts, the user's hands are no longer protected from the hot cooking receptacle. In certain situations, the user will keep one oven mitt on one of their hands in order to secure the cooking receptacle while continuing preparation of the food item. Thus, the user's dexterity remains inhibited resulting in inconvenience to the user, especially in fast-paced commercial kitchens.

Additionally, when the user places the hot cooking receptacle on the preparation surface, the user must be aware of the preparation surface's tolerance for heat. That is, the hot cooking receptacle may damage the preparation surface when the user places the cooking receptacle down to continue preparing the food item.

### SUMMARY OF THE INVENTION

Accordingly, an embodiment provides an apparatus for grasping a cooking receptacle. The apparatus comprises a handle portion comprising an upper arm and a lower arm, the upper arm comprising an upper distal end and an upper proximal end, and the lower arm comprising a lower distal end and a lower proximal end; a hinge member connecting the upper proximal end of the upper arm to the lower proximal end of the lower arm; and a clamping portion comprising, a head portion, a holding member and a supporting member, the head portion disposed at the upper distal end of the upper arm, the holding member disposed on the head portion comprising a receiving groove, and the supporting member disposed on the lower distal end of the lower arm comprising a supporting surface.

Therefore, when the handle portion is compressed, the upper arm and the lower arm rotate towards each other about the hinge member in a manner that the holding member and the supporting member grasp the cooking receptacle.

According to further embodiments: the supporting surface is recessed from a top surface of the lower arm along a sloped portion; a leading edge of the supporting surface extends beyond the head portion when the apparatus is in a closed configuration; the supporting surface comprises a bottom surface and a top surface covered with a heat resistant material comprising at least one of Thermoplastic Elastomer (TPE) rubber, Thermoplastic Rubber (TPR), and silicone; the lower arm comprises a flange member protruding above the top surface of the lower arm towards the upper arm; the upper arm comprises a flange receiving aperture that receives the flange member and when the flange member is inserted into the flange receiving aperture, the apparatus is held in a closed configuration; a release button is disposed on a top surface of the upper arm that releases the flange member from the flange insertion aperture when pressed, allowing the upper arm and the lower arm to rotate away from each other; the receiving groove extends in a transverse direction relative to the upper arm and the lower arm; the receiving groove comprises at least one of an arcuate groove, a square groove, a rectangular groove and a V-shaped groove; the receiving groove comprises an arcuate groove that receives a curved rim of the cooking receptacle; a first grip member is disposed on a top surface of the upper arm and a second grip member is disposed on a bottom surface of the lower arm; the first grip member and the second grip member are constructed of a heat resistant material comprising at least one of Thermoplastic Elastomer (TPE) rubber, Thermoplastic Rubber (TPR), and silicone; the hinge member biases the upper arm and the lower arm away from each other to open the apparatus to an open configuration; an aperture extends through the upper proximal end of the upper arm and the lower proximal end of the lower arm; the holding member comprises a removable holding member attached to the upper distal end of the upper arm by a removable pin; and the removable holding member is provided as an arcuate member, curving away from the apparatus, allowing a circular cooking receptacle to be grasped.

An additional embodiment provides a system comprising a cooking receptacle comprising a cooking surface for cooking a food item thereon, a sidewall structure extending from the cooking surface, and a rim extending along an upper edge of the sidewall structure; and an apparatus for grasping the cooking receptacle comprising a handle portion comprising an upper arm and a lower arm, the upper arm comprising an upper distal end and an upper proximal end, and the lower arm comprising a lower distal end and a lower proximal end, a hinge member connecting the upper proximal end of the upper arm to the lower proximal end of the lower arm and a clamping portion comprising, a head portion, a holding member and a supporting member, the head portion disposed at the upper distal end of the upper arm, the holding member disposed on the head portion comprising a receiving groove, and the supporting member disposed on the lower distal end of the lower arm comprising a supporting surface.

According to further embodiments: the holding member comprises at least one of an arcuate member, a square member and a rectangular member; the receiving groove comprises a square groove, the rim of the cooking receptacle comprises a square rim, and the square groove receives the square rim when the handle portion of the cooking receptacle is compressed; and the receiving groove comprises an arcuate groove, the rim of the cooking receptacle comprises a curved rim, and the arcuate groove receives the curved rim when the handle portion of the cooking receptacle is compressed.

### BRIEF DESCRIPTION OF THE DRAWINGS

The above and other aspects, features and advantages of certain embodiments will be more apparent from the following detailed description taken in conjunction with the accompanying drawings, in which:
FIG. 1 illustrates a perspective view of an apparatus for grasping a cooking receptacle;
FIG. 2 illustrates a right side view of the apparatus;
FIG. 3 illustrates a rear view of the apparatus;
FIG. 4 illustrates a left side view of the apparatus;
FIGS. 5 and 6 illustrate a top view and a bottom view of the apparatus, respectively;
FIG. 7 illustrates a left side view of the apparatus;
FIG. 8 illustrates a front view of the apparatus;
FIG. 9 illustrates an expanded perspective view of the apparatus;
FIG. 10 illustrates a user removing a baking sheet from an oven using the apparatus;
FIGS. 11 and 12 illustrate perspective views of the apparatus in an open configuration and a closed configuration, respectively;
FIG. 13 illustrates a bottom view of the apparatus;
FIG. 14 illustrates a right side view of the apparatus;

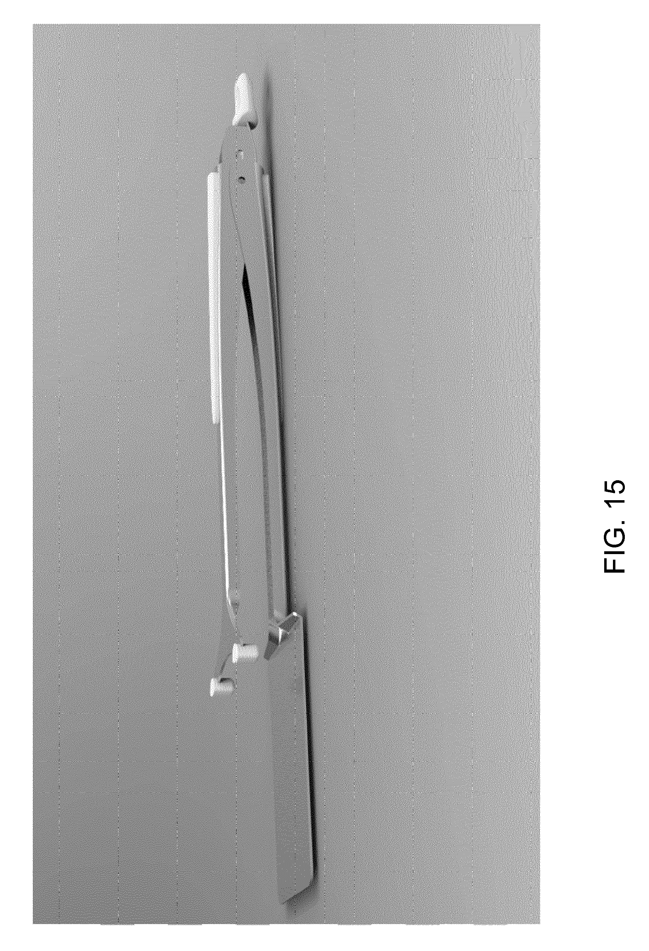

FIG. 15 illustrates a side view of another embodiment of the apparatus;

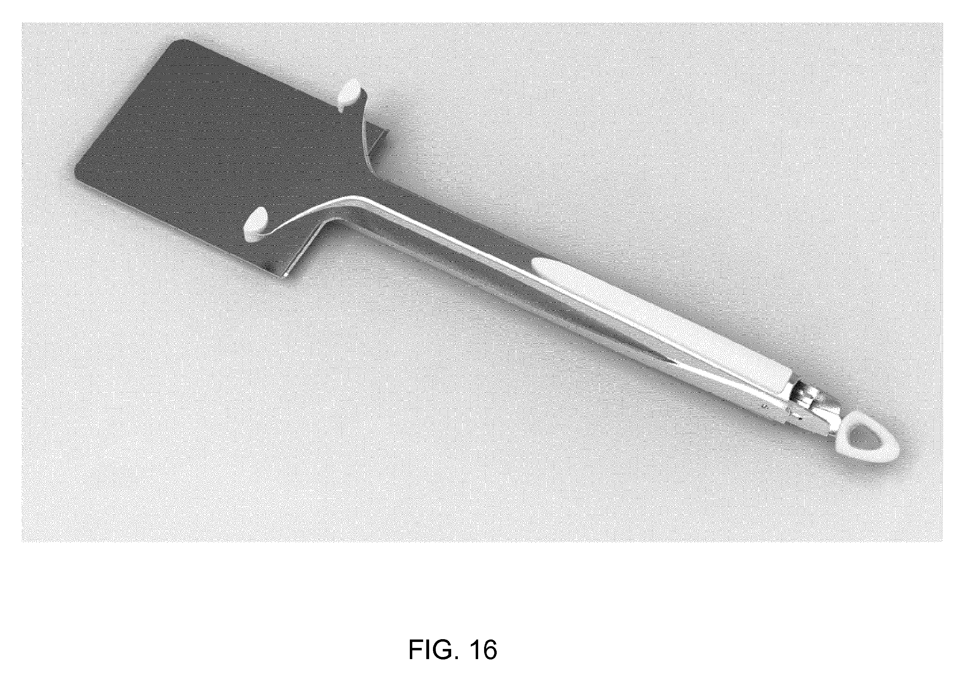

FIG. 16 illustrates a perspective view of another embodiment of the apparatus;
FIG. 17 illustrates a perspective view of another embodiment of the apparatus; and

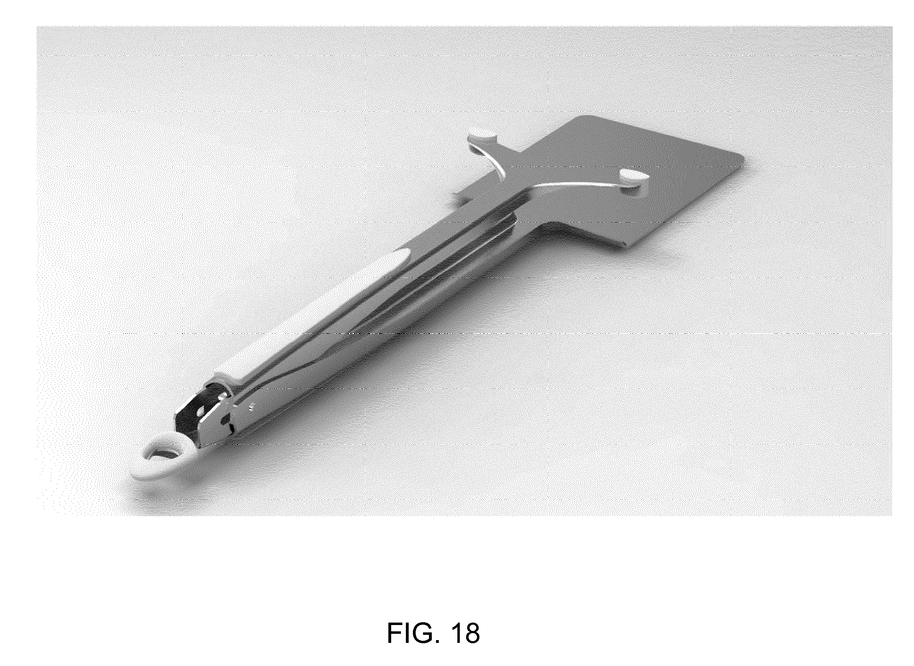

FIG. 18 illustrates a rear perspective view of another embodiment of the apparatus.

### DETAILED DESCRIPTION OF THE PRESENT INVENTION

The following detailed description of certain embodiments will be made in reference to the accompanying drawings. In the detailed description, explanation about related functions or constructions known in the art are omitted for the sake of clearness in understanding the concept of the invention, to avoid obscuring the invention with unnecessary detail.

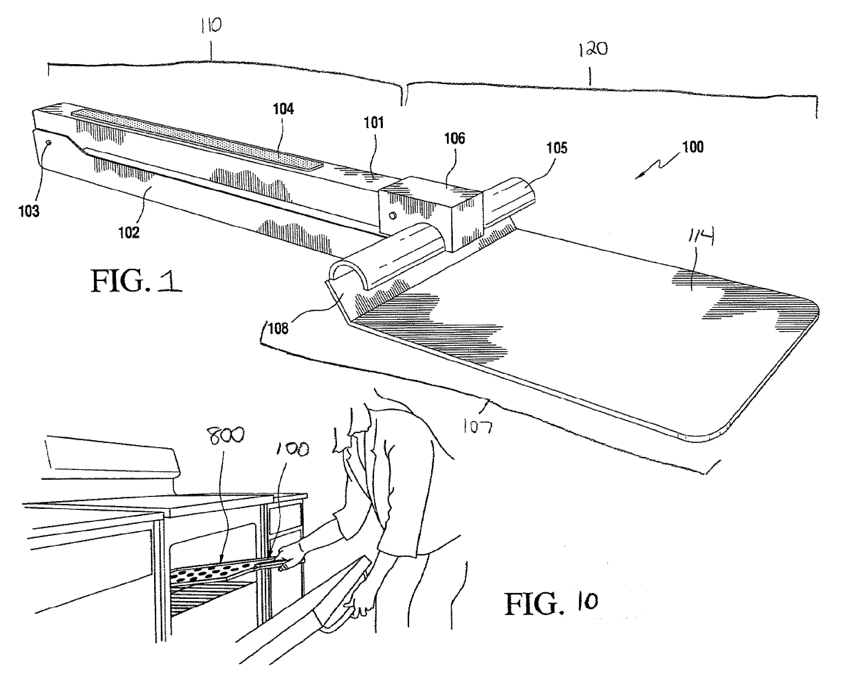

FIG. 1 illustrates a perspective view of an apparatus 100 for grasping a cooking receptacle. The apparatus 100 includes a handle portion 110 and a clamping portion 120. The apparatus 100 may be constructed of stainless steel. For example, the apparatus 100 may be constructed of 300 series stainless steel, such as 304 stainless steel, or stainless steel having a composition including 18% chromium and 8% nickel, or stainless steel having a composition including about 0.08% carbon, 17.5-20% chromium, 8-11% nickel, about 2% manganese, about 1% silicon, about 0.045% phosphorous, and about 0.03% sulfur with the remaining composition being iron, though other suitable materials and types of steel may be used.

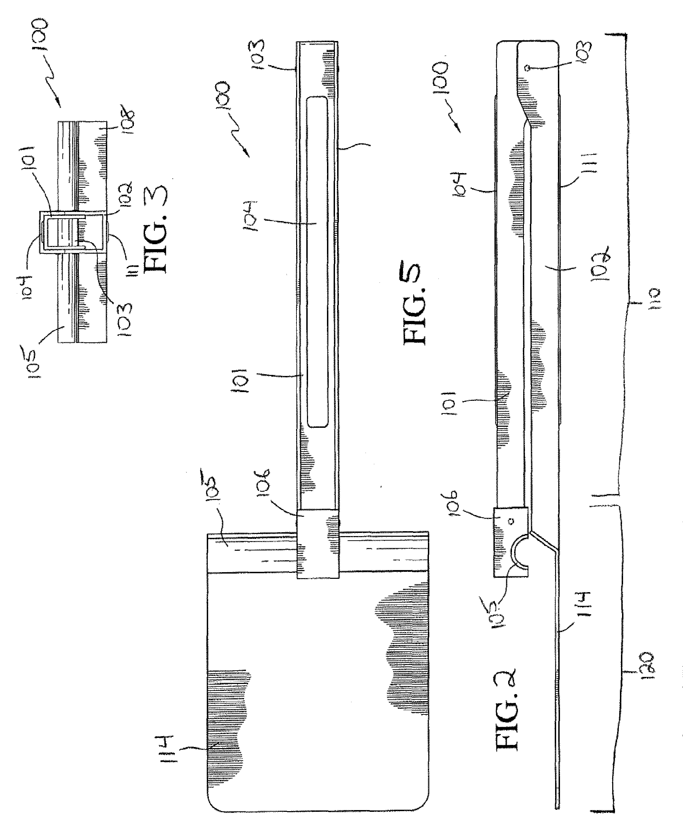

FIG. 2 illustrates a right side view of the apparatus 100. A user may grasp the apparatus 100 by the handle portion 110 with either one hand or two hands. The handle portion 110 includes an upper arm 101 and a lower arm 102. The upper arm 101 includes an upper distal end and an upper proximal end. The lower arm 102 includes a lower distal end and a lower proximal end. An aperture (not shown) may extend through the upper proximal end of the upper arm 101 and the lower proximal end of the lower arm 102. The aperture allows the user to hang the apparatus 100 from, for example, a hook, for convenient storage.

FIG. 3 illustrates a rear view of the apparatus 100. The handle portion 110 may include a hinge member 103 that rotatably connects the upper proximal end of the upper arm 101 to the lower proximal end of the lower arm 102. The hinge member 103 may include a biasing device (not shown) that biases the upper arm 101 and the lower arm 102 to rotate away from each other, opening the apparatus 100 to an open configuration. The biasing device may include a spring mechanism, such as a compression spring, a torsion spring, a flat spring, a coil spring, and other suitable devices. The spring mechanism includes a spring having a range of spring constants, including spring constants of from 10 N/m to 200 N/m, or about 82 N/m, providing a range of force.

The hinge member 103 may include a reverse biasing device (not shown) that biases the upper arm 101 and the lower arm 102 to rotate towards each other, closing the apparatus 100 to a closed configuration. The reverse biasing device keeps the apparatus 100 attached to the cooking receptacle when the user releases the handle portion 110.

Further, the hinge member 103 may include an automatic locking mechanism. For example, the automatic locking mechanism may lock when the user compresses the handle portion 110 beyond a first predetermined threshold, locking the apparatus 100 in a closed configuration. The automatic locking mechanism may be released by compressing the handle portion 110 beyond a second predetermined threshold. The first predetermined threshold and the second predetermined threshold may be provided at approximately the same point of rotation of the upper arm 101 and the lower arm 102 about the hinge member 103. That is, the first predetermined threshold and the second predetermined threshold occur in sequence. Thus, a locked state is provided when the upper arm 101 and the lower arm 102 are compressed to the first predetermined threshold. In the locked state, the user can release the handle portion 110 and the apparatus 100 remains locked. To initiate a release state, the user compresses the upper arm 101 and the lower arm 102 to the second predetermined threshold and the automatic locking mechanism is released.

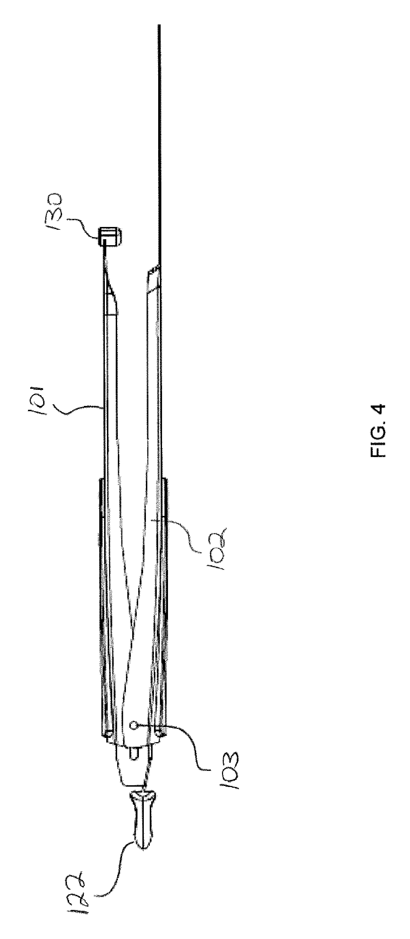

FIG. 4 illustrates a left side view of the apparatus 100. The hinge member 103 may include an active locking mechanism. For example, the active locking mechanism may include a pull-tab 122 integrally attached to the hinge member 103 and extending away from the apparatus 100. With the apparatus 100 in a closed configuration, the user may pull the pull-tab 122 away from the apparatus 100. The pull-tab 122 is configured such that when pulled from a retracted position to an extended position, the pull-tab 122 locks the hinge member 103, preventing the upper arm 101 and the lower arm 102 from rotating away from each other to an open configuration. In order to unlock the hinge member 103, the user may push the pull-tab 122 towards the apparatus 100. The pull-tab 122 is configured such that when pushed from the extended position to the retracted position, the pull-tab 122 unlocks the hinge member 103, allowing the upper arm 101 and the lower arm 102 to rotate away from each other.

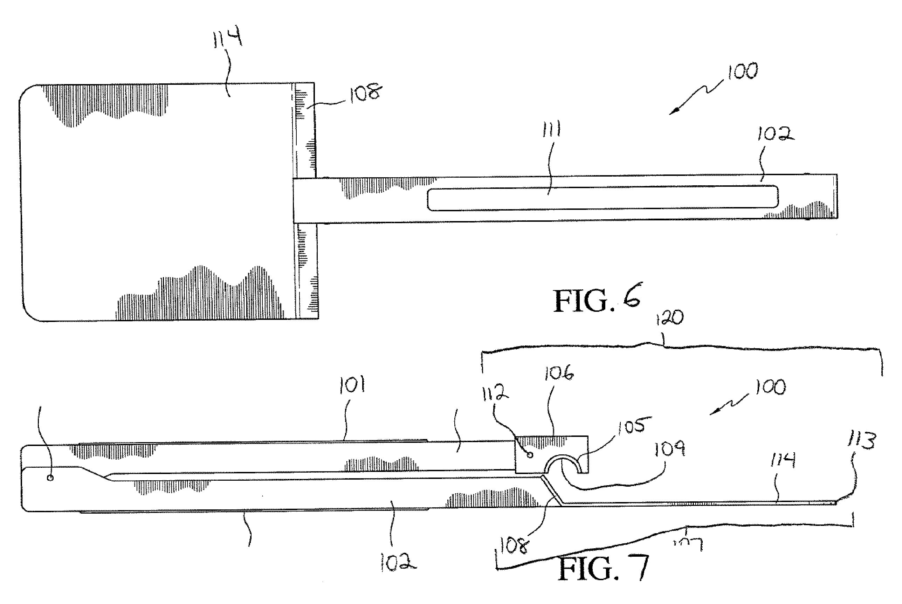

FIGS. 5 and 6 illustrate a top view and a bottom view of the apparatus 100, respectively. The handle portion 110 of the apparatus 100 may include a first grip member 104 disposed on a top surface of the upper arm 101 and a second grip member 111 disposed on a bottom surface of the lower arm 102. The first grip member 104 and the second grip member 111 may be constructed of heat resistant materials that also provide friction such as Thermoplastic Elastomer (TPE) rubber, Thermoplastic Rubber (TPR), silicone, and other suitable materials. The TPE rubber and TPR used to construct the first grip member 104 and the second grip member 111 may have a durometer (A scale) of approximately 25-100, i.e., about 60. The TPE rubber and TPR may also have a durometer from about 40 to 80, or from about 55 to 65, or 60. The first grip member 104 and the second grip member 111 allow the user to securely grasp the handle portion 110 of the apparatus 100. The first grip member 104 and the second grip member 111 also allow the user to leave the apparatus 100 attached to a cooking receptacle, i.e., a pan, pot, or baking sheet, used in a kitchen oven, for extended periods of time knowing the handle portion 110 will not become hot from the cooking receptacle and can subsequently be safely grasped.

FIG. 7 illustrates a left side view of the apparatus 100. The clamping portion 120 includes a head portion 106, a holding member 105 and a supporting member 107. The head portion 106 is disposed at the upper distal end of the upper arm 101. The holding member 105 is attached to the upper distal end of the upper arm 101 by a removable pin 112. The holding member 105 may therefore be a removable holding member that may be replaced with various configurations that allow the user to grasp cooking receptacles of different shapes, sizes and types. For example, according to an embodiment, the holding member 105 may be provided as an arcuate member, curving away from the apparatus 100. Providing the holding member 105 as the arcuate member allows the user to grasp a circular cooking receptacle. The holding member 105 may also be provided as a square member or a rectangular member. In particular, the square member and the rectangular member may have a shape of half of a square or rectangle, respectively, with two right angles. Various shapes of the holding member 105 may be employed allowing the user to grasp a cooking receptacle having a corresponding shape.

The holding member 105 is disposed on the head portion 106. The holding member 105 includes a receiving groove 109. The receiving groove 109 may extend in a transverse direction relative to the upper arm 101 and the lower arm 102. The receiving groove 109 is provided to fit over, and secure, a lip or rim of the cooking receptacle. According to an embodiment, the receiving groove 109 may be provided as an arcuate groove, a square groove, a rectangular groove, or a V-shaped groove. Various shapes of the receiving groove 109 may be employed allowing the user to grasp a cooking receptacle having a rim of a corresponding shape. For example, when the receiving groove 109 is provided as the arcuate groove, the arcuate groove receives a curved rim of the cooking receptacle.

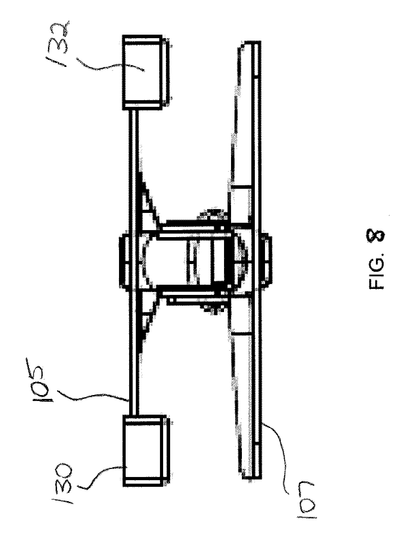

FIG. 8 illustrates a front view of the apparatus 100. The holding member 105 may include a first prong member 130 and a second prong member 132. The first prong member 130 and the second prong member 132 may be disposed on opposite ends of the holding member 105. The first prong member 130 and the second prong member 132 extend away from the holding member 105 in a manner substantially perpendicular to a bottom surface of the holding member 105 towards the support member 107. In this embodiment, the holding member 105 does not include the receiving groove 109, that is, the first prong member 130 and the second prong member 132 hook over a lip or rim of the cooking receptacle allowing the apparatus 100 to grasp the cooking receptacle. When the holding member 105 is configured with the first prong member 130 and the second prong member 132, cooking receptacles of any shape may be grasped.

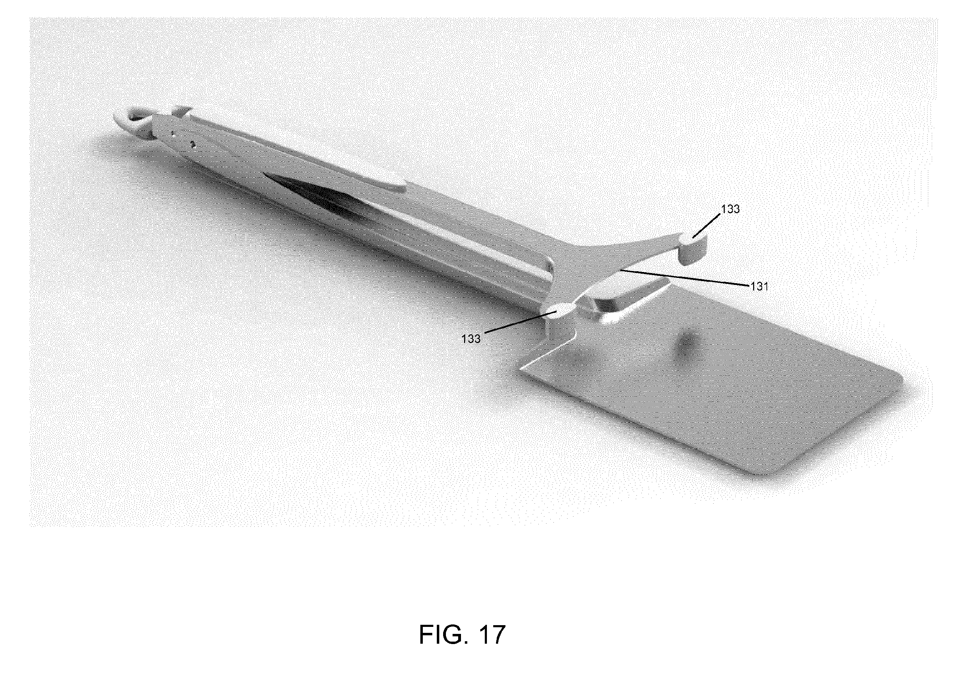

FIG. 17 illustrates a perspective view of another embodiment of apparatus 100. The holding member 105 includes an arcuate portion 131 disposed between the first prong member 130 and the second prong member 132. The arcuate portion 131 is recessed a sufficient distance from the terminal ends of the holding member 105 such that the holding member 105 is able to grasp rounded cooking receptacles. Multiple grommets 133 may be attached to each terminal end of the first prong member 130 and the second prong member 132. The grommets 133 may be used to grasp round-edged cooking receptacles, such as, for example a circular or similarly shaped pie pan. The grommets 133 are made of heat resistant materials such as TPE rubber, TPR, silicone, and other suitable heat resistant materials. The arcuate portion 131 may make contact with a sidewall of the cooking receptacle when the apparatus 100 grasps the cooking receptacle. The grommets 133 attached to the two ends of the arcuate portion may make contact with a top of the cooking receptacle, or fit over, and secure, the lip or rim of the cooking receptacle.

The supporting member 107 is disposed on the lower distal end of the lower arm 102. The supporting member 107 includes a supporting surface 114. The supporting surface 114 bears a majority of the weight of the cooking receptacle. The supporting surface 114 may be recessed from a top surface of the lower arm 102 along a sloped portion 108. The sloped portion 108 descends from the top surface of the lower arm 102 to align with a bottom surface of the lower arm 102. That is, the sloped portion 108 descends from the top surface of the lower arm 102 to the bottom surface of the lower arm 102 a distance equal to the thickness of the lower arm 102. A leading edge 113 of the supporting surface 114 may extend beyond the head portion 106 when the apparatus 100 is in a closed configuration.

The supporting surface 114 includes a bottom surface and a top surface that may be covered with heat resistant materials such as TPE rubber, TPR, silicone, and other suitable heat resistant materials. The TPE rubber and TPR used to construct the first grip member 104 and the second grip member 111 may have a durometer (A scale) of approximately 25-100, i.e., about 60. The TPE rubber and TPR may also have a durometer from about 40 to 80, or from about 55 to 65, or 60. Covering the top surface of the supporting surface 114 provides friction for gripping the cooking receptacle, while covering the bottom surface of the supporting surface 114 prevents heat transferred from the hot cooking receptacle from damaging a preparation surface.

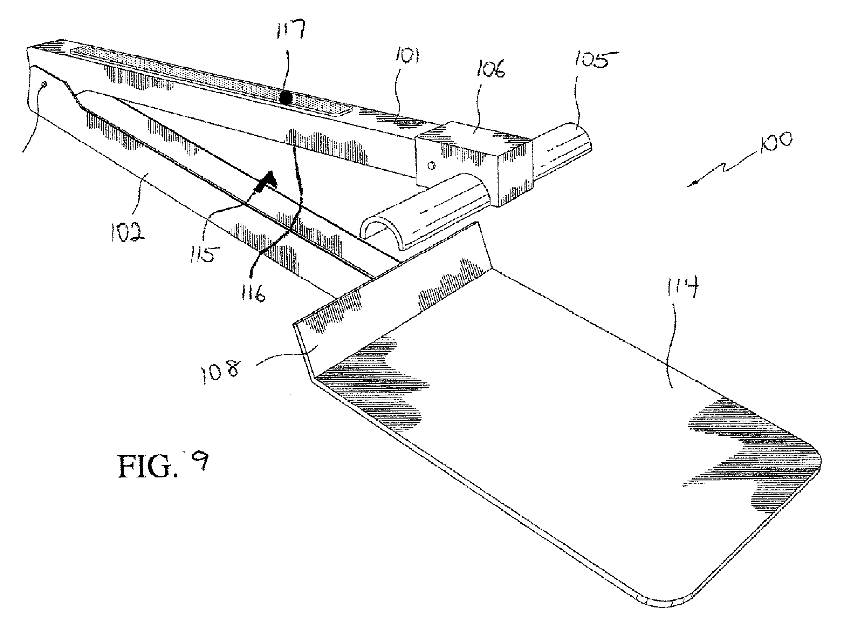

FIG. 9 illustrates an expanded perspective view of the apparatus 100. The lower arm 102 may include a flange member 115 protruding above the top surface of the lower arm 102 towards the upper arm 101. The flange member 115 includes a latch, a pin, or other suitable locking elements. The upper arm 101 includes a flange receiving aperture 116 that receives the flange member 115 when the apparatus is in a closed configuration.

When the flange member 115 is inserted into the flange receiving aperture, the apparatus 100 is held in a closed configuration. That is, the upper arm 101 and the lower arm 102 are locked together. With the apparatus 100 in a locked state, the user can let go of the handle portion 110 and the apparatus 100 will remain attached to the cooking receptacle. The apparatus 100 may include a release button 117 disposed on a top surface of the upper arm 101. When the release button 117 is pressed, the flange member 115 is released from the flange insertion aperture 116 and the upper arm 101 and the lower arm 102 rotate away from each other.

The release button 117 may also be provided as a release trigger (not shown) disposed on the bottom surface of the lower arm 102. For example, the release trigger protrudes from the bottom surface of the lower arm 102 at a position convenient for the user's pointer finger to pull the release trigger when the user grasps the handle portion 110. Thus, the user may pull the release trigger to release the flange member 115 from the insertion aperture 116.

FIG. 10 illustrates a user removing a baking sheet 800 from an oven using the apparatus 100. When a user compresses the handle portion 110, the upper arm 101 and the lower arm 102 rotate towards each other about the hinge member 103 in a manner that the holding member 105 and the supporting member 107 grasp the baking sheet 800.

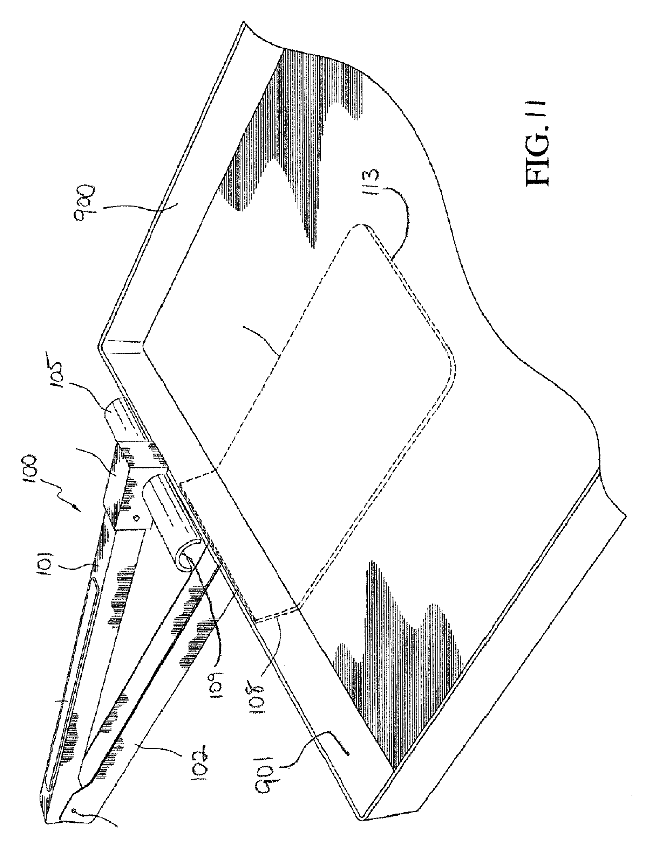

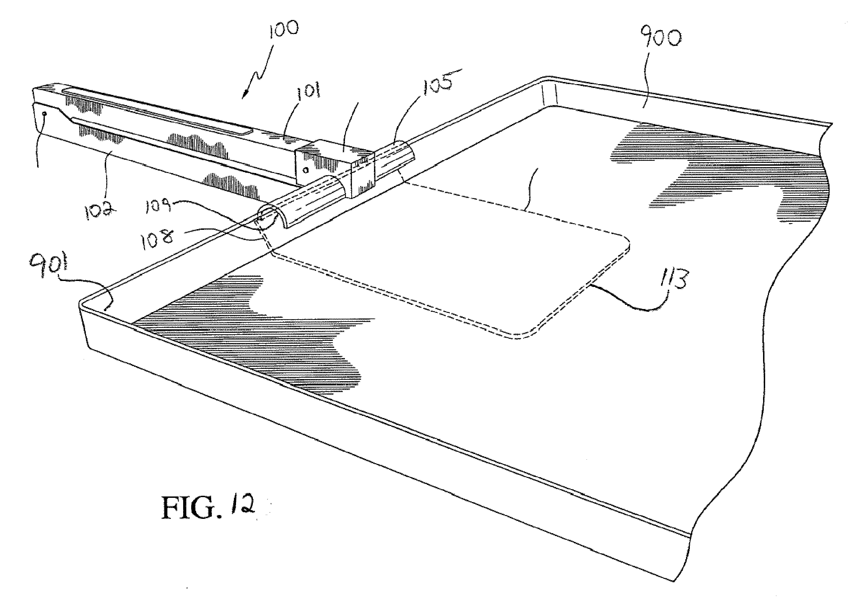

FIGS. 11 and 12 illustrate perspective views of the apparatus 100 in an open configuration and a closed configuration, respectively. In the open configuration, the leading edge 113 of the supporting member 107 is slid underneath a cooking receptacle 900 until the sloped portion 108 of the supporting member 107 contacts a rim 901 of the cooking receptacle 900. The rim 901 extends along an upper edge of a sidewall structure of the cooking receptacle 900. The sidewall structure extends from a cooking surface of the cooking receptacle 900 and a food item is cooked on the cooking surface.

The user then compresses the handle portion 110 to bring the apparatus 100 to a closed configuration. In a closed configuration, the receiving groove 109 of the holding member 105 receives the rim 901, securing the cooking receptacle 900 so that the user can move the cooking receptacle 900 to a desired preparation surface.

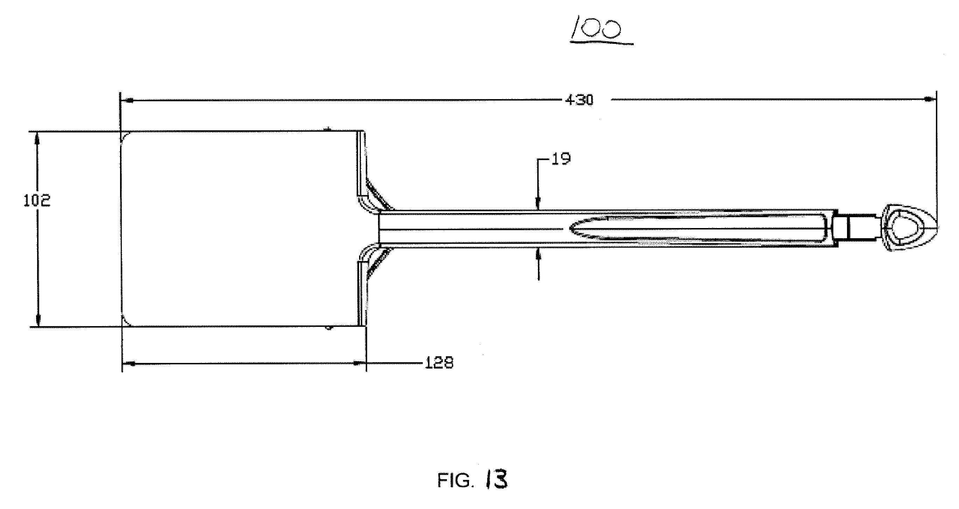

FIG. 13 illustrates a bottom view of the apparatus 100. The apparatus 100 may have an entire length of about 430 millimeters (mm). According to an embodiment, the apparatus 100 may have an entire length of from about 250 to 460 mm. According to an embodiment, the apparatus 100 may have an entire length of from about 355 to 370 mm. The supporting member 107 may have a length of about 128 mm and a width of about 102 mm. The upper arm 101 and the lower arm 102 may have a width of about 19 mm. As can be seen, FIG. 13 includes numerals designating various dimensions expressed in millimeters (mm).

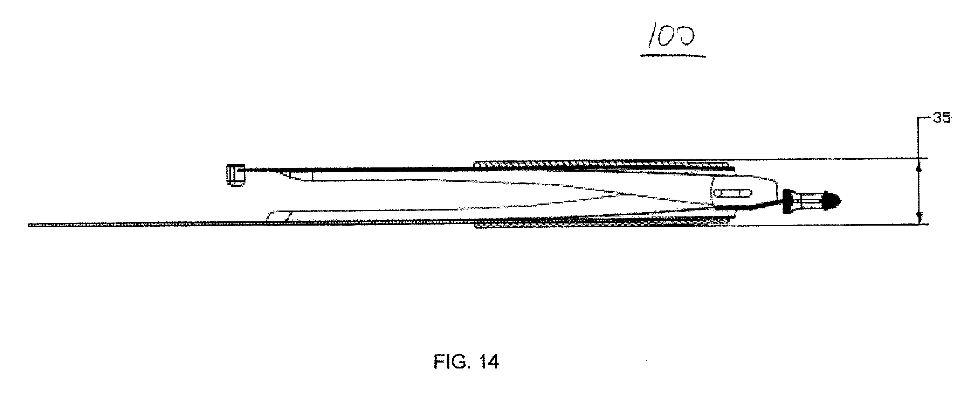

FIG. 14 illustrates a right side view of the apparatus 100. The apparatus 100 may have a height of about 35 mm. As can be seen, FIG. 14 includes numerals designating various dimensions expressed in millimeters (mm).

The dimensions of the apparatus 100 provided in FIGS. 13 and 14 may be altered in proportion thereof. For example, the length of the supporting member 107 is about one third of the entire length of the apparatus 100. The apparatus 100 can therefore be constructed to be larger or smaller while maintaining the one third proportion between the length of the supporting member 107 and the entire length of the apparatus 100. For example, the width of the upper arm 101 and the lower arm 102 is about one fifth of the width of the supporting member 107. The apparatus 100 can therefore be constructed to be larger or smaller while maintaining the one fifth proportion between the width of the upper arm 101 and the lower arm 102 and the width of the supporting member 107.

The dimensions of the apparatus 100 provided in FIGS. 13 and 14 are provided as non-limiting examples and can be altered in proportion as described above. Alternatively, as further non-limiting examples, the above proportions may be altered. For example, the height of the apparatus 100 may be larger or smaller while maintaining the dimensions provided above for the entire length of the apparatus 100, the length and width of the supporting member 107, and the width of the upper arm 101 and the lower arm 102. Additionally, for example, the length of the supporting member 107 may be larger or smaller, e.g., between about one eighth and about seven eighths of the entire length of the apparatus 100, while maintaining the dimensions provided above for the entire length of the apparatus 100, the width of the supporting member 107, the width of the upper arm 101 and the lower arm 102 and the height of the apparatus 100.

While embodiments of the invention have been shown and described with reference to certain embodiments thereof, it will be understood by those skilled in the art that various changes in form and details may be made therein without departing from the spirit and scope of the invention as defined by the appended claims and equivalents thereof.

## Claims

1. An apparatus for grasping a cooking receptacle, comprising:
a handle portion comprising an upper arm and a lower arm, the upper arm comprising an upper distal end and an upper proximal end, and the lower arm comprising a lower distal end and a lower proximal end;
a hinge member connecting the upper proximal end of the upper arm to the lower proximal end of the lower arm; and
a clamping portion comprising, a head portion, a holding member which may comprise a removable holding member attached to the upper distal end of the upper arm by a removable pin, wherein the holding member may be provided as an arcuate member curving away from the apparatus, allowing a circular cooking receptacle to be grasped, and a supporting member, the head portion disposed at the upper distal end of the upper arm, the holding member disposed on the head portion comprising a receiving groove, which may extend in a transverse direction relative to the upper arm and the lower arm and which may comprise at least one of an arcuate groove, a square groove, a rectangular groove and a V-shaped groove, and the supporting member disposed on the lower distal end of the lower arm comprising a supporting surface, which may comprise a bottom surface and a top surface covered with a heat resistant material comprising at least one of thermoplastic elastomer (TPE) rubber, thermoplastic rubber (TPR), and silicone,
wherein when the handle portion is compressed, the upper arm and the lower arm rotate towards each other about the hinge member from an open configuration to a closed configuration in a manner that the holding member and the supporting member grasp the cooking receptacle.

2. The apparatus of claim 1, wherein the supporting surface is recessed from a top surface of the lower arm along a sloped portion.

3. The apparatus of claim 2, wherein a leading edge of the supporting surface extends beyond the head portion when the apparatus is in a closed configuration.

4. The apparatus of claim 1, wherein the lower arm comprises a flange member protruding above the top surface of the lower arm towards the upper arm.

5. The apparatus of claim 4, wherein the upper arm comprises a flange receiving aperture that receives the flange member and when the flange member is inserted into the flange receiving aperture, the apparatus is held in a closed configuration.

6. The apparatus of claim 5, further comprising a release button disposed on a top surface of the upper arm that releases the flange member from the flange insertion aperture when pressed, allowing the upper arm and the lower arm to rotate away from each other.

7. The apparatus of claim 1, wherein the receiving groove comprises an arcuate groove that receives a curved rim of the cooking receptacle.

8. The apparatus of claim 1, further comprising a first grip member disposed on a top surface of the upper arm and a second grip member disposed on a bottom surface of the lower arm.

9. The apparatus of claim 11, wherein the first grip member and the second grip member are constructed of a heat resistant material comprising at least one of Thermoplastic Elastomer (TPE) rubber, Thermoplastic Rubber (TPR), and silicone.

10. The apparatus of claim 1, wherein the hinge member biases the upper arm and the lower arm away from each other to open the apparatus to an open configuration.

11. The apparatus of claim 1, further comprising an aperture extending through the upper proximal end of the upper arm and the lower proximal end of the lower arm.

12. A system, comprising:
a cooking receptacle comprising a cooking surface for cooking a food item thereon, a sidewall structure extending from the cooking surface, and a rim extending along an upper edge of the sidewall structure; and
an apparatus for grasping the cooking receptacle as claimed in any one of the preceding claims.

13. The system of claim 12, wherein the holding member comprises at least one of an arcuate member, a square member and a rectangular member.

14. The system of claim 12, wherein the receiving groove comprises a square groove, the rim of the cooking receptacle comprises a square rim, and the square groove receives the square rim when the handle portion is compressed..

15. The apparatus of claim 12, wherein the receiving groove comprises an arcuate groove, the rim of the cooking receptacle comprises a curved rim, and the arcuate groove receives the curved rim when the handle portion is compressed.
